# EUROPÄISCHE PATENTANMELDUNG

(11) **EP 1 293 642 A1**
(43) Veröffentlichungstag der Anmeldung: **19.03.2003**
(21) Anmeldenummer: 02405603.8
(22) Anmeldetag: 15.07.2002
(51) Int. Cl.: E21F 17/02, F16L 3/26

(54) **Aufhängevorrichtung**

(30) Priorität: 14.09.2001 CH 20011697
(71) Anmelder: Burri AG Zürich, 8152 Glattbrugg (CH)
(72) Erfinder: Clot, Marcel, 5462 Siglistorf (CH); Burri, Martin, 8600 Dübendorf (CH)
(74) Vertreter: Patentanwälte Feldmann & Partner AG

(57) **Zusammenfassung**

Es wird eine neue vorfabrizierte Aufhängevorrichtung zur Verwendung in Stollen, Tunnels oder Hallen, mit Grundelementen (1) und mindestens einem mit den Grundelementen (1) verbindbaren Längsträgerprofil (2) vorgeschlagen. Die Grundelemente (1) umfassen jeweils ein C-förmiges Halteelement (30) mit einem offenen Aufnahmeraum zum Einlegen und Tragen des Längsträgerprofils (2). Grundplattenlose C-förmige Halteelemente (3) mit einem ebenfalls einseitig offenen Aufnahmeraum zum können am Längsträgerprofil (2) befestigt werden. Die C-förmigen Halteelemente (3, 30) dienen der Befestigung von Leuchtkörpern, Kabelkanälen, Überwachungseinrichtungen und Sicherungseinrichtungen. Die neue Aufhängevorrichtung umfasst ein Minimum an Bauteilen und ist äusserst schnell, einfach und sicher zu montieren.

## Beschreibung

Die Erfindung betrifft eine vorfabrizierte Aufhängevorrichtung zur Verwendung in Stollen, Tunnels oder Hallen, mit Grundelementen mit Grundplatten und mindestens einem, mit den Grundelementen verbindbaren Längsträgerprofil gemäss Oberbegriff des Patentanspruches 1.

Beim Bau von Strassentunnels werden für die Montage von Installationen und Tunneleinrichtungen seit Jahren geeignete Metallprofile eingesetzt bzw. einbetoniert in den Beton eingelegt. Solche Montageprofilschienen, beispielsweise Jordal-Profilschienen, sind zum Beispiel in Abständen von 1,5 m an der Tunneldecke vorgesehen, so dass mit einfachen Mitteln sämtliche Montagen vorgenommen werden können. Die Erfahrung hat gezeigt, dass die Installation und Montage der Tunneleinrichtungen oft unter nicht idealen Bedingungen durchgeführt werden muss, nicht zuletzt auch unter grossem Termindruck. Bauliche Toleranzen wirken sich bei diesen Arbeiten oft sehr erschwerend aus, indem häufig die zur Montage gelangenden Teile an Ort angepasst und somit noch bearbeitet werden müssen und dadurch den erforderlichen Korrosionsschutz teilweise verlieren.

In der Fig. 1 ist eine aus der CH-A5-610'057 der Anmelderin bekannte Aufhängevorrichtung dargestellt. Gezeigt ist eine fertig montierte Aufhängevorrichtung mit Längsträgerprofil 7 an einer Aufhängestelle in einer Ansicht von vorne. Die Grundplatte 5, welche an einer nicht dargestellten Tunneldecke befestigt ist, ist mit zwei gegeneinander gekehrten Hängewinkeln 17 und 18 versehen, welche der Aufnahme von Halterhälften 9 und 10 dienen. Jede Halterhälfte 9, 10 weist einen U-förmigen Teil 23 zur Aufnahme eines korresponierenden T-förmigen Längsträgerprofils auf. Halteleisten 24 mit Fixiernasen 20 und 21 dienen dem Einführen zwischen die Hängewinkel 17 und 18. Die beiden Halterhälften 9 und 10 sind mit Durchgängen 25 und 26 versehen. Sie werden mittels Schrauben zusammengeschraubt. Das Längsträgerprofil 7 ist von den beiden Halterhälften 9 und 10 vollständig eingefasst und die beiden Hälften 9 und 10 sind mittels Schrauben verbunden. Die Halterhälften sind also speziell auf das T-förmige Längsträgerprofil angepasst. Die Verbindung der unteren Schenkel der Hälften 9 und 10 ist nur durch die Achse dargestellt, während die obere Verbindung zwei Klemmklötze 28, 29 zeigt, die von der Halteschraube durchsetzt sind und ein Anheben der Halterhälften 9 und 10 mit dem Längsträgerprofil 7 zwischen den Hängewinkeln 17 und 18 der Grundplatte 5 verunmöglichen. Die Halterhälften 9 und 10 liegen mit ihren Halteleisten 24 auf den horizontalen Schenkeln der Hängewinkel 17 und 18, wobei die Fixiernasen 20 und 21 die Hängewinkel 17 und 18 seitlich (vorn und hinten) übergreifen, was ein Ausschieben des Halters 9, 10 aus den Hängewinkeln 17, 18 verunmöglicht.

Obwohl das bekannten System seit vielen Jahren erfolgreich im Einsatz ist, hat sich vor allem beim Einsatz der bekannten Aufhängevorrichtung an Tunneldecken gezeigt, dass die Überkopf-Montage der Halterhälften 9, 10 mit dem Längsträgerprofil 7 in den Hängewinkeln 17 und 18 der Grundplatte 5 einiges Geschick und genaues Arbeiten erfordert. Das Gewicht der verwendeten Längsträgerprofile mit 6 m Länge beträgt allein schon an die 30 Kilogramm. Diese Profile müssen während der Montage genau in Position gehalten werden, damit die Halterhälften 9 und 10, welche wiederum genau zu den jeweiligen Grundplatten positioniert werden müssen, mit ihren U-förmigen Teilen 23 genau um das T-förmigen Längsträgerprofil angeordnet und mit oberen und unteren Verschraubungen befestigt werden können.

Der Erfindung liegt deshalb die Aufgabe zugrunde eine Aufhängevorrichtung zur Verfügung zu stellen, die die genannten Nachteile nicht oder nur in geringerem Masse aufweist, wobei sie kostengünstig hergestellt werden kann und eine besonders einfache Montage sicherstellt.

Dies Aufgabe wird ausgehend von einer Aufhängevorrichtung gemäss des Oberbegriffs des Anspruches 1, durch die kennzeichnenden Merkmale des Anspruchs 1 gelöst.

Die Erfindung umfasst die technische Lehre, dass eine Aufhängevorrichtung mit einem einteiligen Halter mit einem unteren horizontalen Tragarm zur Auflage eines Längsträgerprofils die Montage erheblich erleichtert und beschleunigt. Dies gilt vor allem wenn die Montage durch nicht-spezialisierte Arbeiter erfolgt. Alle Arbeiten sind auch ohne Spezialwerkzeuge schnell und einfach möglich. Die neue Aufhängevorrichtung zeichnet sich dadurch aus, dass sie einteilige C- oder L-förmige Halter aufweist, welche verschiedene Arten von Längsträgerprofilen an diskreten Stellen tragen können und an welchen das Längsträgerprofil gesichert gehalten ist. Die Halter sind vorzugsweise mit den Grundplatten einstückig ausgebildet, so dass die neue Aufhängekonstruktion ausser einem Minimum an speziellen Formteilen ausschliesslich gängige ab Lager lieferbare Profile aufweist. Dies ermöglicht es die neue Aufhängevorrichtung in grossen Serien kostengünstig herzustellen. Dennoch bleibt genügend Flexibilität um bei der Montage nicht auf bauliche Toleranzen achten zu müssen und wesentliche Bearbeitung auf der Baustelle zu vermeiden.

Weitere vorteilhafte Ausführungsvarianten ergeben sich aus der Beschreibung und den abhängigen Ansprüchen.

In den Zeichnungen sind Ausführungsbeispiele des Erfindungsgegenstandes dargestellt und in der nachfolgenden Beschreibung erläutert. Es zeigt:

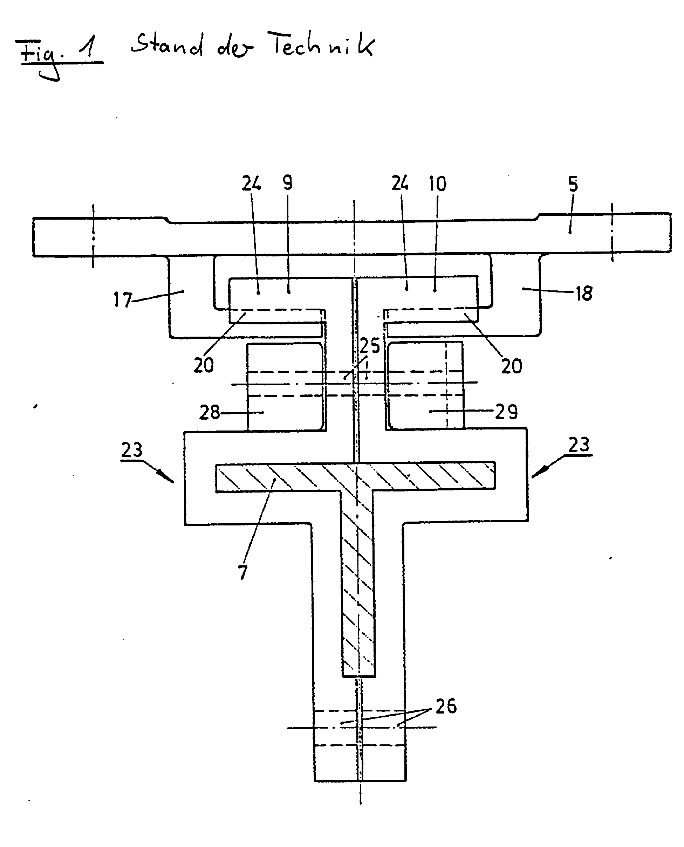

- Figur 1: eine aus dem Stand der Technik bekannte Aufhängevorrichtung;
- Figur 2: einen Ausschnitt aus einem Querschnitt eines Tunnels im Deckenbereich, mit schematisch dargestellter Aufhängevorrichtung;
- Figur 3: einen Schnitt durch eine Profilschiene mit Halter und Leuchtenhalterung in Ansicht von vorne; und
- Figur 4: eine Seitenansicht auf die an einer Decke montierte Aufhängevorrichtung mit eingehängten Leuchten.

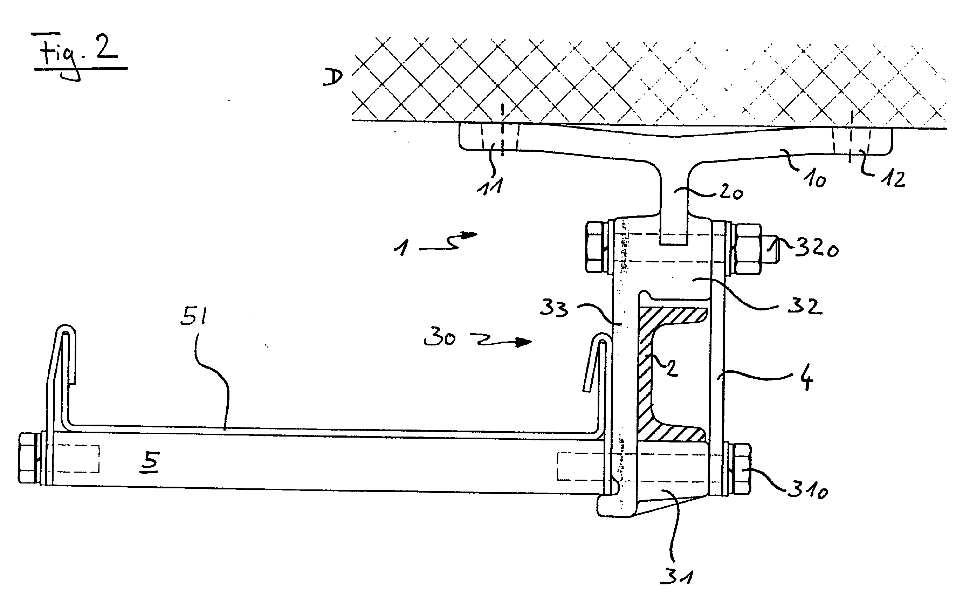

In Figur 2 ist ein Ausschnitt aus einer Tunneldecke D mit einer erfindungsgemässen Aufhängevorrichtung ersichtlich, wobei eine Grundplatte 10 eines Grundelementes 1 mittels Schrauben an der Decke D befestigbar ist. Das Grundelement 1 umfasst die Grundplatte 10 und einen, im dargestellten Ausführungsbeispiel einstückig mit der Grundplatte 10 verbundenen C-förmigen Halters 30, welcher zur Aufnahme und Halterung eines Längsträgerprofils 2 dient. Von der horizontalen Grundplatte 10 erstreckt sich ein Halsstück 20 im wesentlichen senkrecht nach unten an welchem ein C-förmiger Halter 30 angeordnet ist. Der C-förmige Halter 30 umfasst einen oberen und einen unteren Querbalken 31, 32, welche über einen seitlichen Vertikalbalken 33 derart miteinander verbunden sind, dass eine seitliche Öffnung zum Einführen des Längsprofils 2 frei bleibt.

Das Längsträgerprofil 2, das normalerweise in der Tunnel- bzw. Stollenlängsachse verläuft, kann also nach Befestigung des Grundelementes 1 an einer Decke D problemlos in die Aufnahmeöffnung des C-förmigen Halters 30 eingelegt werden. Mittels einer Sicherungsplatte 4 ist die Aufnahmeöffnung im C-förmigen Halter 30 verschliessbar und es ist sichergestellt, dass sich das Profil 2 nicht ungewollt vom Grundelement 1 lösen kann. Im dargestellten Beispiel ist die Sicherungsplatte 4 mit je einer Schraube am oberen und am unteren Querbalken 31, 32 lösbar befestigt.

Am unteren Querbalken 31 kann auf der, der Aufnahmeöffnung gegenüberliegenden, Seite ein Träger 5 für einen Kabelkanal 51 befestigt werden. Vorzugsweise sind die Sicherungsplatte 4 und Träger 5 mit der selben Schraube am unteren Querbalken 31 befestigt. Der unteren Querbalken 31 wird dazu von einer Bohrung vollständig durchsetzt. Profilschiene 2 und Kabelkanal 51 sind durch den Vertikalbalken 33 des C-förmigen Halters 30 voneinander beabstandet. Im eingebauten Zustand verlaufen Profilschiene 2 und Kabelkanal 51 parallel nebeneinander und beeinträchtigen sich gegenseitig nicht. Zum Einbau der Kabelkanäle steht annähernd die gesamte Höhe des Grundelementes 1 zur Verfügung. Dies bedeutet, dass auch handelsübliche genormte Kunststoffkabelkanäle auf dem Träger 5 montiert werden können. Bei den bekannten Aufhängevorrichtungen der CH-A5-610'057 war dagegen die Höhe der Kabelkanäle durch den oberen Querbalken der T-förmigen Profilschiene stark eingeschränkt, so dass beispielsweise die genormten Kunststoffkabelkanäle nicht zum Einsatz kommen konnten.

Der in der Figur 2 dargestellte Kabelkanal 51 ist an seiner linken und rechten Seite jeweils mit einem Sicherungshaken am Träger 5, welcher die Querverschiebemöglichkeit des Kabelkanals 51 begrenzt.

Bei Bedarf kann am Träger 5 auch eine nicht dargestellte Führungsschiene für eine Leuchtenreinigungsmaschine angebracht werden.

Der rechteckige Aufnahmeraum im vorfabrizierten C-förmigen Halter 30 erlaubt eine relativ freie Auswahl des Profiltyps für die Längsträgerprofile 2. Neben den dargestellten U-förmigen Längsträgern 2 können zum Beispiel auch I- oder T-förmige Profile oder rechteckige Hohlprofile verwendet werden.

Die einstückigen Grundelemente 1 sind vorzugsweise feuerverzinkte und pulverbeschichtete Gussteile, welche durch ihre hohe Korrosionsbeständigkeit und Lebensdauer die Unterhaltskosten entsprechend niedrig halten. Die Längsträgerprofile 2 sind vorzugsweise aus feuerverzinktem Walzprofilstahl hergestellt, der mit einem Zweikomponentenlack beschichtet ist. Schrauben, Gewindestangen und Sicherungselemente sind vorzugsweise aus rostfreiem Stahl gefertigt.

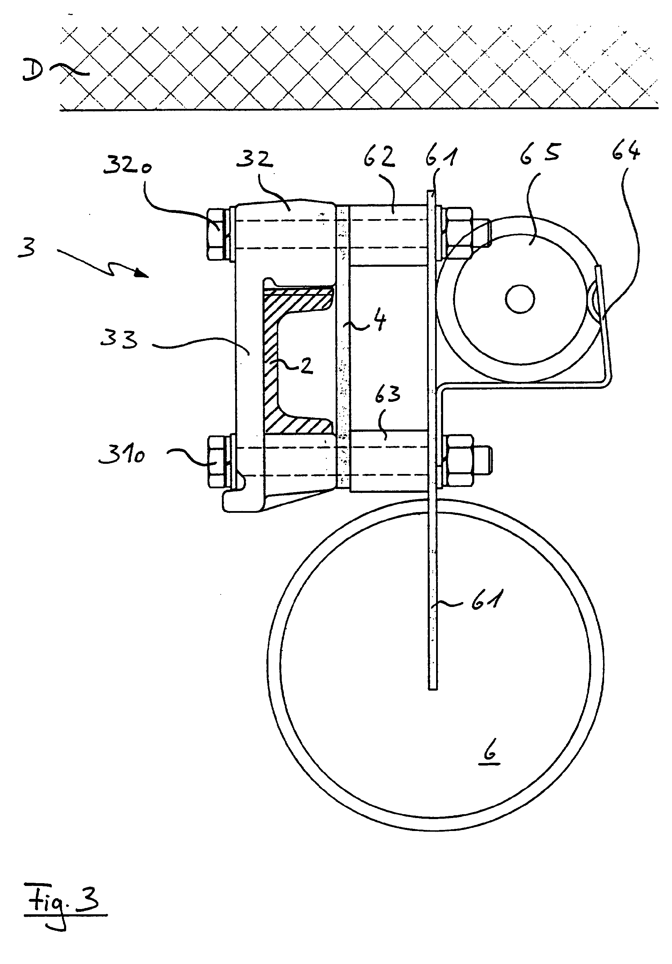

Der zweite Typ von Gussteilen, welcher bei der vorliegenden Erfindung zum Einsatz kommt, ist in der Figur 3 dargestellt. Die vorfabrizierten C-förmigen Halter 3 sind ebenso wie die Grundelelemente 1 vorzugsweise feuerverzinkt und pulverbeschichtet, weisen jedoch weder ein Halsstück 20 noch eine Grundplatte 10 auf. Ansonsten entsprechen sie den C-förmigen Haltern 30 der Grundelemente 1. Sie dienen in erster Linie dazu Leuchtenhalterungen 61 für die aufzuhängenden Beleuchtungskörper am Längsträgerprofil 2 zu befestigen.

In der Figur 2 ist eine Aufhängevorrichtung im Bereich einer Leuchtenhalterungen 61 geschnitten dargestellt. Der C-förmige Halter 3 ist am C-Profil 2 eingehängt und mit einer Sicherungsplatte 4 gesichert. Zwei Schrauben 310, 320, durchsetzen jeweils vollständig den oberen und den unteren Querbalken 31, 32 und halten die Platte 4 vor der Aufnahmeöffnung des C-förmigen Halters 3. Die Schrauben 310, 320 halten zusätzlich noch die Leuchtenhalterung 61, an die der Beleuchtungskörper 6 eingehängt ist. Im Bereich zwischen Platte 4 und Leuchtenhalterung 61 sind Distanzstücke 62, 63 über die Schrauben 310, 320 gesteckt, so dass die Leuchtenlängsachse um die Breite der Distanzstücke 62, 63 nach Rechts versetzt unterhalb des Längsträgerprofils 2 zu liegen kommt.

In der Ausführungsform der vorliegenden Erfindung gemäss Figur 3 wird mittels der Schraube 310, welche den unteren Querarm 31 durchsetzt, auch noch ein Klemmhalter 64 für die Steckverbindung 65 zwischen zwei benachbarten Beleuchtungskörpern 6 am Profil 2 gehalten.

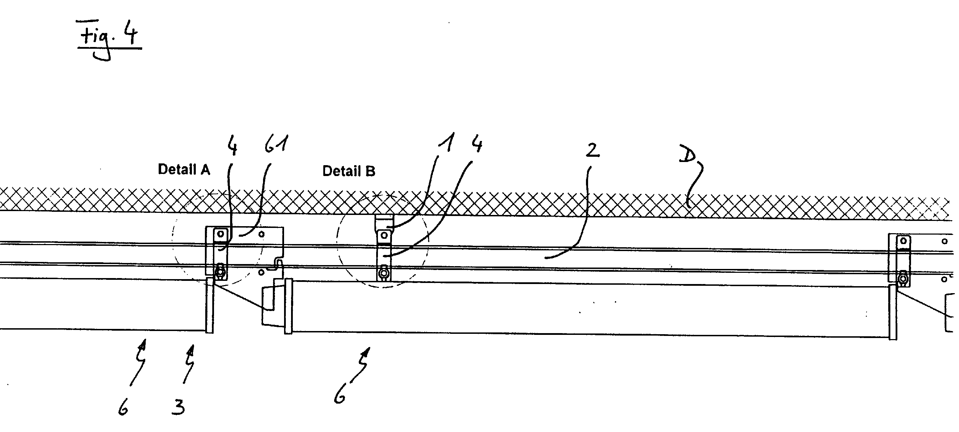

In der Figur 4 ist ein Ausschnitt einer Tunnelbeleuchtung mit erfindungsgemässen Aufhängevorrichtungen dargestellt.

Es wird deutlich, dass die Grundelemente 1 in relativ frei wählbaren Abständen an der Decke D angebracht werden können. Je nach Gewicht der aufzuhängenden Leuchten, der Steifigkeit der Profile oder der Befestigungsmöglichkeiten an der Tunneldecke kann der Abstand zwischen den Grundelementen 1 variiert werden. Es ist lediglich darauf zu achten, dass sie nicht mit den C-förmigen Haltern 3 in Konflikt kommen. Deren Position an den Längsträgerprofilen 2 (mit einer Länge von vorzugsweise 6 m) wird durch die Länge der einzuhängenden Leuchtenkörper 6 vorgegeben. Es haben sich annähernd 1,5 m langen Rohrleuchten 6 im Einsatz bewährt, welche in die bekannten Leuchtenhalterungen 61 der Anmelderin ohne Werkzeug eingehängt werden können.

Defekte Leuchten werden nicht vor Ort repariert, sondern der komplette Leuchtenkörper 6 wird ohne Werkzeug ausgehängt und durch einen neuen ersetzt. Die eigentliche Wartung der Beleuchtungskörper erfolgt im Werkstattbetrieb ausserhalb des Tunnels, wodurch die Behinderung des Verkehrs im Tunnel auf ein absolutes Mindestmass reduziert wird.

Die vorfabrizierten Teile können sowohl an vorhandene Befestigungsprofilschienen, als auch mittels Steinschrauben, Dübeln etc. direkt an einer Decke montiert werden. Mit Hilfe der erläuterten Teile ist es durch die Verwendung entsprechender Profilschienen und Leuchtenhalterungen ein Einfaches, die Leuchten an der gewünschten Stelle zu montieren. Die ganze Konstruktion ist derart flexibel, dass alle Leuchtentypen mit entsprechenden Aufhängepunkten verwendet werden können. Abmessungen der Leuchten, bauliche Toleranzen, Abstände von Aufhängepunkten u. dgl. beeinträchtigen die Aufhängevorrichtung nicht und stellen keine weiteren Anforderungen an sie.

Durch die Verwendung einer zusätzlichen Konsole, wie sie von der Anmelderin zum Einsatz mit dem System gemäss des Standes der Technik bekannt ist, ist eine Montage an einer senkrechten Auflage oder Wand ebenfalls ohne weiteres möglich.

Grundsätzlich kann die neue Aufhängevorrichtung wie folgt montiert werden: Die Grundplatte 10 wird an der Decke, z.B. mittels Hammerkopfschrauben auf einer eingelegten Montageprofilschiene oder mit Steinschrauben bzw. Schrauben und Dübeln direkt in der Tunnel- bzw. Stollendecke oder -wand befestigt. Die Grundplatte 10 weist vorzugsweise ein querverlaufendes Langloch 11 sowie ein längsverlaufendes Langloch 12 auf. Diese Langlöcher 10, 11 erlauben ein Ausrichten der Grundplatte 10, bei der Befestigen an bereist eingebaute Montageprofilschienen in nicht ganz exakte Bohrlöcher in einer Decke. Eine Höhenanpassung oder ein Höhenausgleich bei nicht waagrechter Decke kann z.B. mittels Unterlagen oder mittels einer Befestigung über Gewindestangen erfolgen. Mittels Laserstrahl-Nivelliervorrichtung oder einer Richtschnur werden die Grundplatten auf das gewünschte Niveau gebracht. Das durchgehende Längsträgerprofil kann ohne weitere Vorbereitung auf dem Boden bei der Montage sofort nach Befestigung der Grundelemente 1 an der Tunneldecke in diese eingelegt und mit den Sicherungen 4 befestigt werden.

Um zwischen den Haltern 31, 3 und dem Längsträgerprofil 2 eine bessere Verbindungen zu erhalten, können auf den entsprechenden Klemmflächen der Halter oder der Sicherungsplatten 4 Warzen vorgesehen sein. Diese sichern eine kraftschlüssige Verbindung mit hohen Flächendrücken.

Die C-förmigen Halter 3 werden auch zum Verbinden der Stösse zwischen den Profilen 2 verwendet.

Alle zum Einsatz kommenden Verbindungsschrauben werden vorzugsweise mit bekannten Mitteln gesichert.

Nun werden die Halter 3 mit den Leuchtenhalterungen 61 und den Klemmhaltern 64 für die Stecker 65 an den entsprechenden Orten des Längsträgerprofils befestigt, so dass die Belsuchtungskörper nur noch eingehängt werden müssen.

Sollen Kabelkanäle eingebaut werden, so werden die vorgesehenen Kabelkanalträger 5 vorzugsweise schon vor oder direkt nach der Deckenmontage der Grundelemente an diesen befestigt, wobei die Sicherungsplatten 4 auch schon am unteren Querarm 31 angeschraubt ist und nach unten hängt. Nach dem Einlegen des Profils 2 in den Halter 30 kann die Sicherungsplatte einfach nach oben geschwenkt, am oberen Querarm angeschraubt und die Schraubverbindung am unteren Querarm festgezogen werden. Anschliessend kann der Kabelkanal 51 montiert und nachfolgend die Kabeltrassen darauf verlegt werden.

Abschliessend werden sämtliche Verbindungen nochmals kontrolliert und bei Bedarf gesichert.

Die Grundidee der neuen vorfabrizierten Aufhängevorrichtung liegt darin, dass nur noch zwei verschiedene Gussteile, die in grossen Stückzahlen kostengünstig hergestellt werden können, und lagerhaltige Eisenprofile, die lediglich abzulängen sind, so einfach zusammengestellt werden können, dass auch angelernte Arbeitskräfte unter Anleitung in die Lage versetzt werden, einfach und sicher eine Halterung für Leuchten, Kabeltrassen und übrige Installationsteile montieren zu können.

Durch die Möglichkeit die schweren Profilschienen einfach in die Grundelemente einzulegen wird die Montage wesentlich erleichtert und beschleunigt.

Es ist natürlich möglich, auf diese Weise die Grundelemente 1, Halter 3 oder die Träger 5 mit weiteren Leisten, Haltenasen u. dgl. auszurüsten, bei Bedarf weitere Profile, Feuermelder, Kameras, Notbeleuchtungen u. dgl. anzubringen.

## Patentansprüche

1. Vorfabrizierte Aufhängevorrichtung zur Verwendung in Stollen, Tunnels oder Hallen, mit Grundelementen (1) und mindestens einem mit den Grundelementen (1) verbindbaren Längsträgerprofil (2), wobei das Längsträgerprofil an diskreten Stellen von den Grundelementen (1) ein- oder umfasst wird, **dadurch gekennzeichnet, dass** die Grundelemente (1) jeweils ein C-förmiges Halteelement (30) umfassen welches einen einseitig offenen Aufnahmeraum zum Einlegen und Tragen des Längsträgerprofils (2) definiert.

2. Aufhängevorrichtung nach Anspruch 1, **dadurch gekennzeichnet, dass** die Grundelemente (1) eine einstückig mit dem C-förmiges Halteelement (30) verbundene Grundplatte (10) umfasst, wobei die Grundplatte (10) senkrecht zu dem C-förmigen Halteelement (30) angeordnet ist.

3. Aufhängevorrichtung nach Anspruch 1, **dadurch gekennzeichnet, dass** grundplattenlose C-förmige Halteelemente (3) einen einseitig offenen Aufnahmeraum zum Einlegen und Anhängen an das Längsträgerprofil (2) definieren und beabstandet von den Grundelementen (1) die Längsträgerprofile (2) dreiseitig umfassend an diskreten Stellen an diesen befestigbar sind.

4. Aufhängevorrichtung nach Anspruch 1, **dadurch gekennzeichnet, dass** der Aufnahmeraum oder die Aufnahmeöffnung der C-förmigen Halteelemente (3) und Halter (30) mit einer Sicherungsplatte (4) lösbar verschliessbar sind.

5. Aufhängevorrichtung nach Anspruch 4, **dadurch gekennzeichnet, dass** die Sicherungsplatte (4) mit einem unteren Querarm (31) und einem oberen Querarm (32) der C-förmigen Halteelemente (3) und Halter (30) lösbar verschraubbar oder verklemmbar ist.

6. Aufhängevorrichtung nach Anspruch 5, **dadurch gekennzeichnet, dass** an dem unteren Querarm (31) und/oder dem oberen Querarm (32) der C-förmigen Halteelemente (3) und Halter (30) Träger (5) für Kabelkanäle (51) und/oder Halterungen (61) für Beleuchtungselemente (6) und/oder Klemmhalter (64) für Stecker (65) befestigbar sind.

7. Aufhängevorrichtung nach Anspruch 1, **dadurch gekennzeichnet, dass** der Aufnahmeraum oder die Aufnahmeöffnung der C-förmigen Halteelemente (3) und Halter (30) annähernd rechteckig ist.

8. Aufhängevorrichtung nach Anspruch 5, **dadurch gekennzeichnet, dass** der untere Querarm (31) der C-förmigen Halteelemente (3) eine horizontale Auflage für die Längsträgerprofile (2) bildet.

9. Aufhängevorrichtung nach Anspruch 1, **dadurch gekennzeichnet, dass** die Längsträgerprofile (2) U-förmig, L-förmig, T-förmig oder rechteckige Hohlprofile sind.

10. Aufhängevorrichtung nach Anspruch 1 oder 3, **dadurch gekennzeichnet, dass**
